# EUROPÄISCHE PATENTANMELDUNG

(11) **EP 2 085 185 A1**
(43) Veröffentlichungstag der Anmeldung: **05.08.2009**
(21) Anmeldenummer: 09150829.1
(22) Anmeldetag: 19.01.2009
(51) Int. Cl.: B25B 7/00, B25G 1/06, H02G 1/12

(54) **Zangengriff und Zange**

(30) Priorität: 31.01.2008 DE 202008001390 U; 12.06.2008 DE 202008008012 U
(71) Anmelder: Weidmüller Interface GmbH & Co. KG, 32758 Detmold (DE)
(72) Erfinder: Hanning, Günther, 32758 Detmold (DE); Heggemann, Christian, 32758 Detmold (DE); Hetland, Detlev, 32760 Detmold (DE); Köster, Thomas, 33189 Schlangen (DE); Wedler, Andreas, 32756 Detmold (DE); Storm, Siegfried, 33189 Schlangen (DE)
(74) Vertreter: Dantz, Jan Henning

(57) **Zusammenfassung**

Ein Zangengriff, ist an einem Zangengehäuse (2) einer Zange (1), vorzugsweise einer Abisolierzange befestigt, wobei zumindest ein Teil des Zangengriffes oder der gesamte Zangengriff (3, 4) in einer Ruheposition relativ zu dem Zangengehäuse (2) verstellbar ist.

## Beschreibung

Die vorliegende Erfindung betrifft einen Zangengriff gemäß dem Oberbegriff des Anspruchs 1 sowie eine Zange gemäß dem Oberbegriff des Anspruchs 19.

Zangen bestehen in der Regel aus einem Zangenkörper mit einem Zangenmaul und zwei Zangengriffen, von denen einer starr am Zangenkörper befestigt oder teilweise auch einstückig mit dem Zangenkörper ausgebildet ist und der andere schwenkbar am Zangenkörper befestigt ist, so dass bei der Betätigung der Zange der schwenkbare Zangengriff in Richtung des starr am Zangenkörper befestigten Zangengriff gedrückt wird. Die Griffe stehen in einer festen winkligen Position zum Zangenkörper. Nachteilig ist, dass solche Zangen in schwer zugänglichen Arbeitsbereichen nicht optimal handhabbar sind, insbesondere wenn der zu bearbeitende Gegenstand sich hinter einem anderen Gegenstand befindet und der Benutzer der Zange nur unter einem für die Zange unvorteilhaften Winkel an den zu bearbeitenden Gegenstand herankommt. Nachteilig ist auch, dass die Griffweite von Zangen an die Griffweite einer Durchschnittshand angepasst ist. Hat ein Benutzer eine im Vergleich zum Durchschnitt sehr große Hand, wird ihm eine solche Zange nicht gut in der Hand liegen und seine Handmuskulatur schneller ermüden.

Der Erfindung liegt daher die Aufgabe zugrunde, einen Zangengriff sowie eine Zange zu entwickeln, der bzw. die die oben genannten Nachteile beseitigt und kostengünstig herzustellen ist.

Diese Aufgabe wird durch einen Zangengriff mit den Merkmalen des kennzeichnenden Teils des Anspruchs 1 sowie durch eine Zange mit den Merkmalen des kennzeichnenden Teils des Anspruchs 19 gelöst.

Mithilfe des in dem erfindungsgemäßen Zangengriff eingesetzten Gelenkes ist ein einfaches Arretieren des Zangengriffes in eine gewünschte Arbeitsposition ermöglicht. Dadurch sind auch schwer zugängliche Gegenstände mit der Zange mit den abgewinkelten Zangengriffen leicht zu bearbeiten.

Weitere vorteilhafte Ausbildungen der Erfindung sind in den Unteransprüchen gekennzeichnet.

Die erfindungsgemäße auf den Zangengriff aufgesetzte Griffschale ist leicht und schnell zu montieren.

Auch die Justierung auf eine dem Benutzer angenehme Griffweite ist leicht und schnell durchführbar.

Durch die Ausbildung des Einstellmechanismus zur Justierung der Griffweite als eine in einer Ausnehmung verschiebbaren Nase zwischen der Griffschale und einem Handhebel ist eine besonders einfache Handhabung der Griffweitenjustierung ermöglicht.

Solche Griffschalen sind außerdem kostengünstig herzustellen.

Durch die Erfindung wird außerdem erreicht, dass eine Ermüdungserscheinung der Benutzerhand aufgrund einer nicht optimal auf die Handgröße angepasste Griffweite erheblich reduziert ist.

Nachfolgend werden Ausführungsbeispiele anhand der beigefügten Zeichnungen beschrieben. Es zeigen:
- Fig. 1: eine perspektivische Ansicht einer Zange mit einer Ausführungsform eines Zangengriffes mit aufgesetzten Griffschalen und Gelenken im fertig montierten Zustand.
- Fig. 2: eine perspektivische Ansicht einer Zange mit einer Ausführungsform eines Zangengriffes im abgewinkelten Zustand,
- Fig. 3: eine perspektivische Detailansicht einer Ausführungsform eines Zangengriffs mit Gelenk,
- Fig. 4: eine perspektivische Detailansicht einer Ausführungsform eines Zangengriffs mit Einstellmechanismus für eine Griffschale.
- Fig. 5: eine perspektivische Detailansicht einer Ausführungsform eines Zangengriffs mit Einstellmechanismus für eine Griffschale.
- Fig. 6: eine perspektivische Detailansicht einer Ausführungsform eines Zangengriffs mit Einstellmechanismus für eine Griffschale,
- Fig. 7: eine Draufsicht auf eine Seite einer Ausführungsform einer Zange mit verstellbarer Griffschale,
- Fig. 8: eine Draufsicht auf eine Stirnseite einer Ausführungsform einer Zange mit verstellbarer Griffschale.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

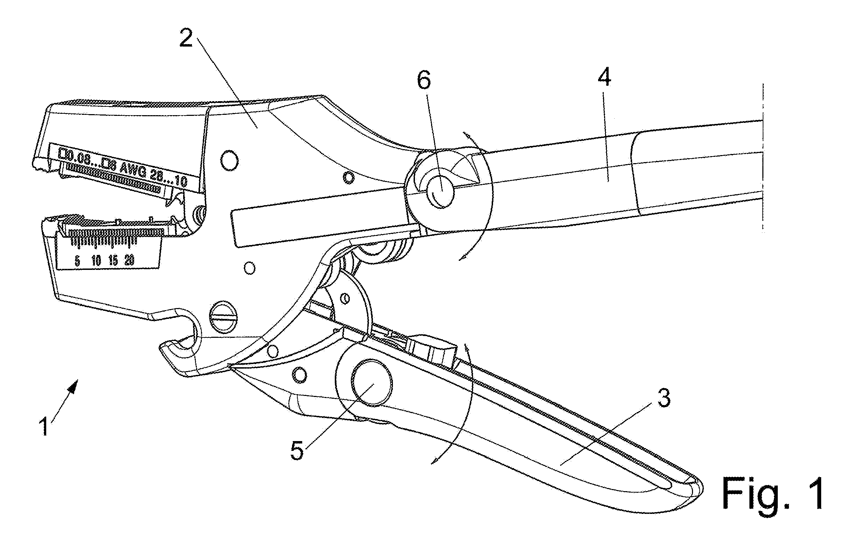

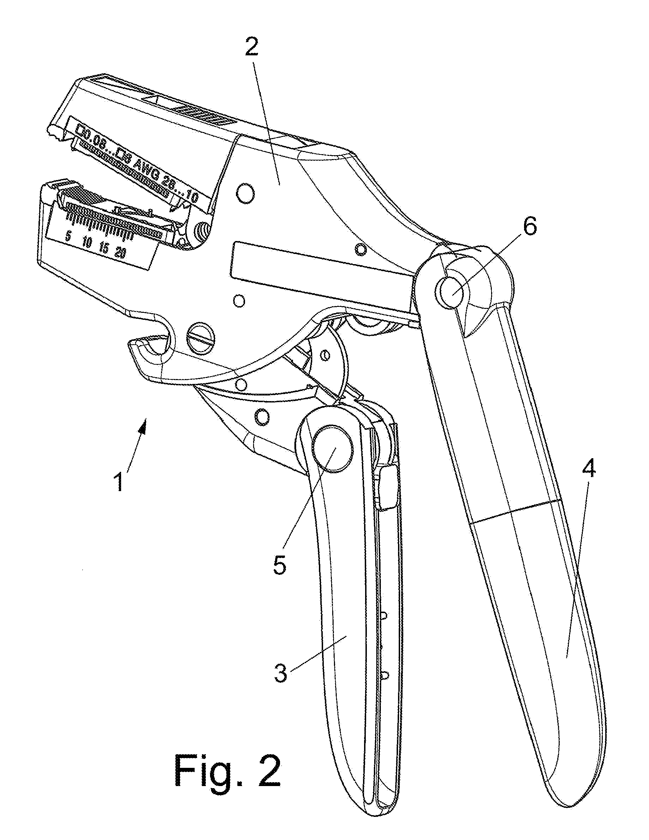

Die Fig. 1 und 2 zeigen eine Zange 1 mit einem Zangengehäuse 2 und zwei Zangengriffen 3 und 4. Auf der den Zangengriffen 3, 4 abgewandten Seite des Zangengehäuses 2 befindet sich das Zangenmaul 19. Beide Zangengriffe 3, 4 ragen mit ihrem dem Zangengehäuse 2 zugewandten Teil in das Zangengehäuse 2 hinein. Der in den Figuren untere Zangengriff 3 ist mittels eine hier nicht näher beschriebene Mechanik schwenkbar an dem Zangengehäuse 2 angeordnet, so dass er bei Benutzung in Richtung des oberen Zangengriffes 4 bewegt werden kann, um das Zangenmaul 19 zu schließen.

Beide Zangengriffe 3, 4 weisen an einem dem Zangengehäuse 2 nahen Bereich ein Gelenk 5,6 auf, das eine Verstellung zumindest eines Teiles der Zangengriffe 3, 4 oder der gesamten Zangengriffe 3, 4 durch Verschwenkung in einem bestimmten Winkelbereich ermöglicht.

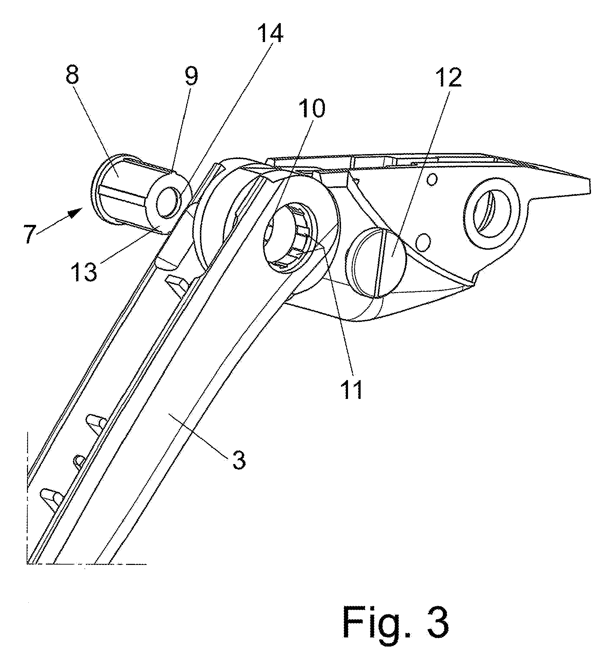

Figur 3 zeigt ein solches Gelenk in einer Detailansicht. Das Gelenk 5, 6 besteht aus einem Zylinder 7, der durch eine Bohrung 10 im der Gehäuseschale 2 zugewandten Teil der Zangengriffes 3 einsteckbar ist.

Auf der Mantelaußenfläche 8 des Zylinders 7 sind voneinander beabstandete Stege 9 ausgebildet. Diese Stege 9 verlaufen in Richtung der Längsachse des Zylinders 7 und erstrecken sich bevorzugt über die gesamte Länge des Zylinders 7.

Die Bohrung 10 im Zangengriff 3 weist an ihrer Innenfläche Nuten 11 auf, die bevorzugt im gleichen Abstand wie die Stege 9 auf der Mantelaußenfläche 8 des Zylinders 7 angeordnet sind. Andere Abstände sind ebenfalls möglich, wobei dann auf das Zahlenverhältnis zwischen Nuten 11 und Stegen 9 zu achten ist.

Die Stege 9 auf der Mantelaußenfläche 8 des Zylinders 7 sind mithilfe eines in eine Stirnseite 13 des Zylinders 7 eintretenden Arretierstückes 12, das dabei die Stege 9 radial in die Nuten 11 in den Innenseiten der Bohrungen 10 drückt, arretierbar. Dieser Arretierstück 12 ist bevorzugt als Schraube ausgebildet, die in ein Innengewinde 14 in einer der Stirnseiten 13 des Zylinders 7 einschraubbar ist. Dadurch können die Zangengriffe vor der Benutzung in eine für eine Hand des Benutzers bequeme Position gebracht und in einfacher Weise in dieser Position arretiert werden.

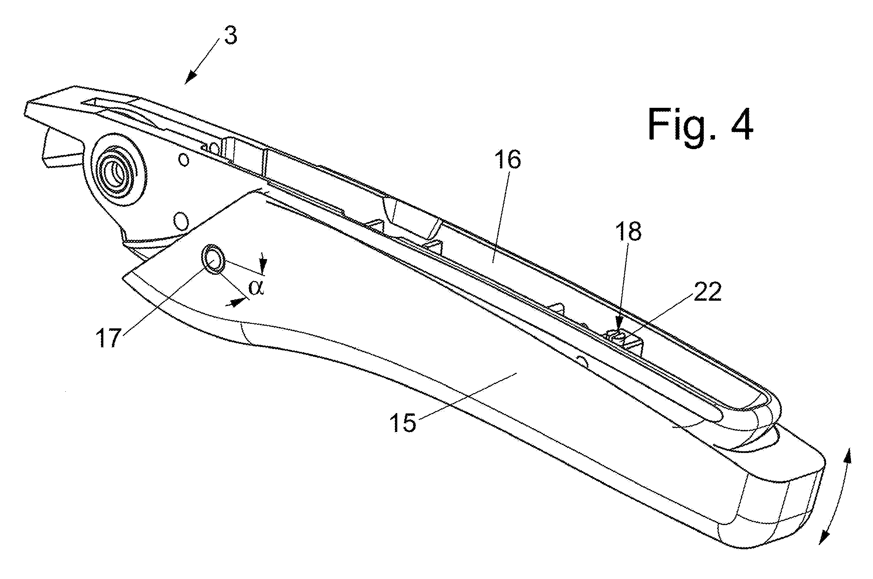

Anhand der Figuren 4 bis 6, die die Handgriffe 3 bzw. 4 zeigen, soll beispielshalber ein weiteres Detail der Handgriffe 3, 4 näher erläutert werden. Wie in diesen Figuren zu erkennen ist, bestehen die Zangengriffe 3, 4 aus einem Handhebel 16, 20 und einer den Handhebel 16, 20 umfassenden Griffschale 15, 19. Die Griffschale 15, 19 umfasst dabei zumindest die dem jeweils anderen Handgriff 4, 3 abgewandte Seite des Handhebels. Die Griffschale 15, 19 ist bevorzugt auf den Handhebel 16, 20 abnehmbar aufgestülpt, um ein einfaches Austauschen der Griffschalen 15, 19 zur optimalen Anpassung der Zangengriffweite an die Hand eines Benutzers vor der Benutzung der Zange 1 zu ermöglichen.

Der Abstand zwischen Griffschale 15, 19 und Handhebel 16, 20 ist über einen Einstellmechanismus 18, 21 variabel einstellbar. Dieser Einstellmechanismus 18 ist im hier gezeigten Ausführungsbeispiel als verstellbarer Abstandshalter am dem Zangengehäuse 2 abgewandten Ende des Zangengriffes 3 ausgebildet. Wie in Figur 4 gezeigt, weist der verstellbare Abstandshalter eine Einstellschraube 22 ausgebildet.

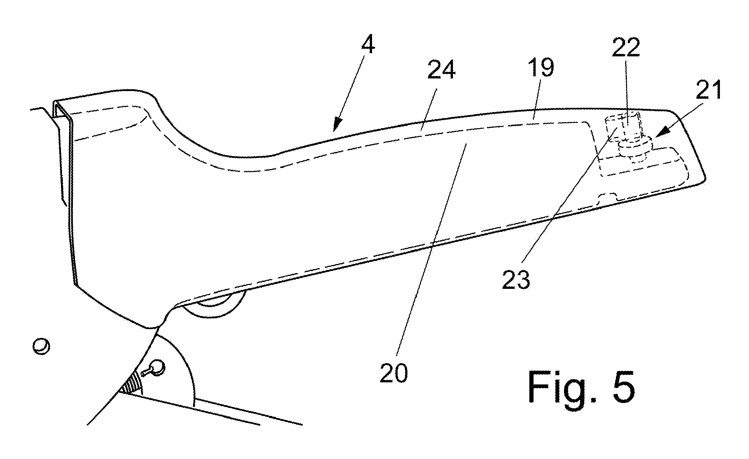

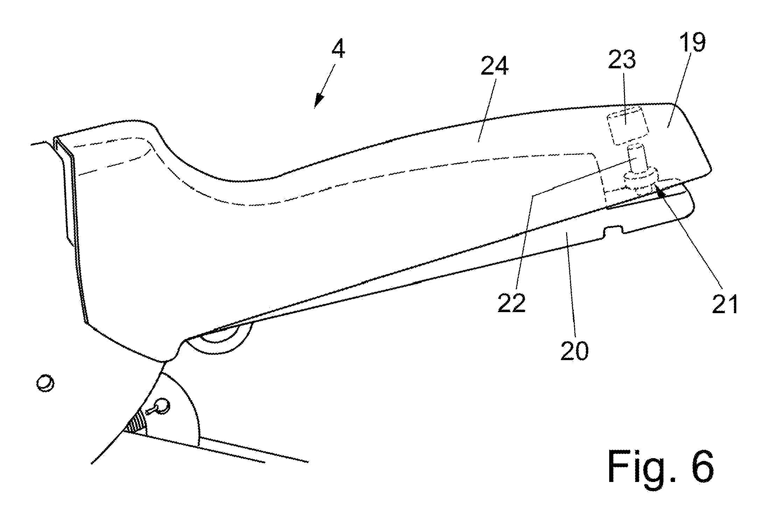

In einer in Figur 5 gezeigten Einstellung der Griffschale 19 für eine minimale Griffweite wird der einem Griffschalenrücken 24 zugewandte Teil der Einstellschraube 22 in einem in der Griffschale ausgebildeten Hohlraum 23 aufgenommen. Wie in Figur 6 gezeigt ist, tritt die Einstellschraube 22 beim Verstellen der Griffschale zu größeren Griffweiten mehr und mehr aus diesem Hohlraum 23 heraus.

Im dem Zangengehäuse 2 zugewandten Bereich des Zangengriffes 3 ist die Griffschale 15 drehbar um eine in diesem Bereich angeordnete Drehachse 17 gelagert. Die Griffschale 15 ist auf diese Weise durch Verstellen des Abstandshalters 18 am dem Zangengehäuse 2 abgewandten Ende des Zangengriffes 3 um einen Winkelbereich α drehbar. Dreht man mit Hilfe des Einstellmechanismus die Griffschale 15 auf der dem Zangengehäuse 2 abgewandten Ende des Zangengriffes 3 von dem Handhebel 16 weg, führt dies zu einer Vergrößerung der Griffweite der Zange 1. Damit ist eine Justiermöglichkeit der Griffweite der Zange 1 über die Griffschale 15 geschaffen, die dem jeweiligen Benutzer eine optimale Handhabung der Zange 1 erlaubt.

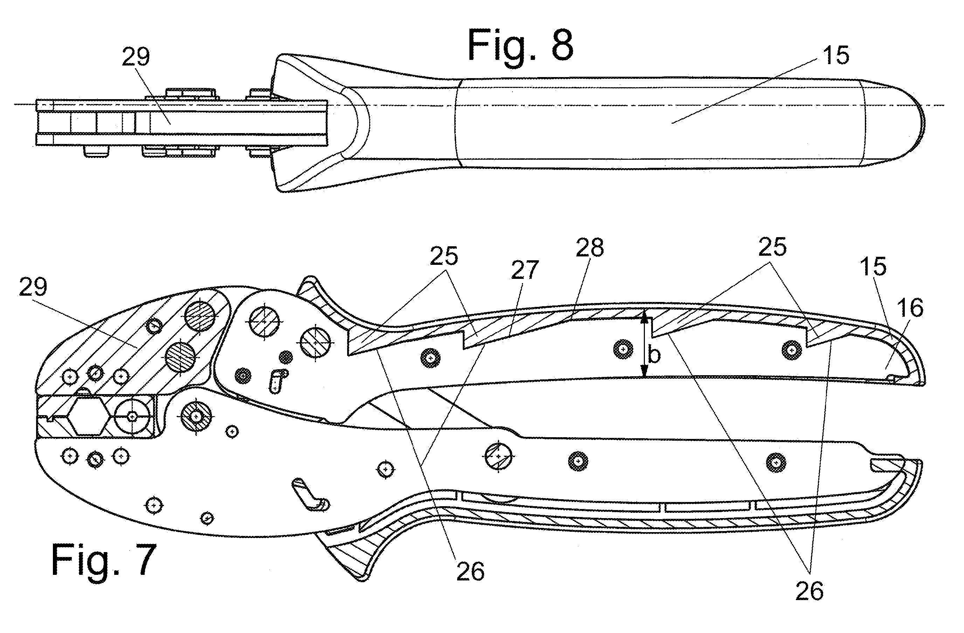

In einer weiteren, in den Figuren 7 und 8 gezeigten bevorzugten Ausführungsform ist der Einstellmechanismus als in einer Ausnehmung 26 verschiebbaren Nase 25 zwischen der Griffschale 15 und dem Handhebel 16 ausgebildet. Dabei variiert der Abstand b zwischen Griffschale 15 und Handhebel 16 je nach Position der Nase 25 in der Ausnehmung 26. Bevorzugt steht aus der Griffschale 15 an ihrer dem Handhebel 16 zugewandten Seite mindestens eine Nase 25, in der gezeigten Ausführungsform sind es vier Nasen 25, hervor. Die Nase 25 ist bevorzugt keilförmig geformt, andere Formen wie beispielsweise eine Tropfenform sind jedoch ebenso denkbar. Der Rücken 27 der Nase 25 erstreckt sich entlang der Längsachse der Griffschale 15. Die Wurzel 28 der Nase 25 ist bevorzugt dem Zangengehäuse 2 abgewandten Ende hin zugewandt. Eine entgegen gesetzte Ausrichtung ist ebenfalls denkbar. Die Wurzel 28 ragt in eine Ausnehmung 26 an der der Griffschale 15 zugewandten Seite des Handhebels 16 hinein. Die Griffschale 15 ist entlang der Längsachse des Handhebels 16 verschiebbar auf dem Handhebel 16 festgelegt, so dass je nach Stellung der Nase 25 in der Ausnehmung 26 des Handhebels 16 die Griffschale 15 unterschiedlich weit von dem Handhebel 16 absteht und damit dem jeweiligen Benutzer eine optimale Handhabung der Zange 1 erlaubt.

Als weitere Ausführungsform kommt auch eine aus dem Handhebel 16 hervor stehende Nase 25 in Betracht, die in eine Ausnehmung 26 in der Griffschale 15 hineinragt.

In einer nicht gezeigten weiteren Ausführungsform ist die Griffschale zweiteilig ausgebildet ist. Die Teilung der Griffschale 15 verläuft dabei parallel zum Griffschalenrücken 24. Ein erstes Teil der Griffschale 15 ist auf dem Handhebel 16 aufsetzbar und arretierbar. Der Einstellmechanismus ist als in einer Ausnehmung 26 verschiebbaren Nase 25 zwischen den beiden Teilen der Griffschale 15 ausgebildet Dabei weist das erste Teil der Griffschale 15 mindestens eine Ausnehmung 26, in der gezeigten Ausführungsform sind es vier Ausnehmungen 26, in einer einem zweiten Teil der Griffschale 15 zugewandten Seite auf. Aus dem zweiten Teil der Griffschale 15 steht an einer dem ersten Teil der Griffschale 15 zugewandten Seite eine der Anzahl der Ausnehmungen entsprechende Anzahl von Nase 25 hervor, deren Rücken sich entlang der Längsachse der Griffschale erstreckt und deren Wurzel bevorzugt dem Zangengehäuse 2 abgewandten Ende hin zugewandt ist. Eine umgekehrte Ausrichtung ist ebenfalls denkbar. Die Nase 25 bzw. die Nasen 25 ragen in die Ausnehmung 26 im ersten Teil der Griffschale 15 hinein. Der zweite Teil der Griffschale 15 ist entlang der Längsachse des Handhebels 16 verschiebbar auf dem ersten Teil der Griffschale 15 festgelegt, so dass je nach Stellung der Nase 25 in der Ausnehmung 26 die Griffschale 15 unterschiedlich weit von dem Handhebel absteht und damit dem jeweiligen Benutzer eine optimale Handhabung der Zange 1 erlaubt.

### Bezugszeichenliste

- 1: Zange
- 2: Zangengehäuse
- 3: Zangengriff
- 4: Zangengriff
- 5: Gelenk
- 6: Gelenk
- 7: Zylinder
- 8: Mantelaußenfläche
- 9: Steg
- 10: Bohrung
- 11: Nut
- 12: Arretierstück
- 13: Stirnseite
- 14: Innengewinde
- 15: Griffschale
- 16: Handhebel
- 17: Drehachse
- 18: Einstellmechanismus
- 19: Griffschale
- 20: Handhebel
- 21: Einstellmechanismus
- 22: Einstellschraube
- 23: Hohlraum
- 24: Griffschalenrücken
- 25: Nase
- 26: Ausnehmung
- 27: Nasenrücken
- 28: Nasenwurzel

## Patentansprüche

1. Zangengriff, der an einem Zangengehäuse (2) einer Zange (1), vorzugsweise einer Abisolierzange, befestigt ist,
**dadurch gekennzeichnet, dass** zumindest ein Teil des Zangengriffes oder der gesamte Zangengriff (3, 4) in einer Ruheposition relativ zu dem Zangengehäuse (2) verstellbar ist.

2. Zangengriff nach Anspruch 1, **dadurch gekennzeichnet, dass** zumindest ein Teil des Zangengriffes oder der Zangengriff in einer Ruheposition (3, 4) relativ zu dem Zangengehäuse (2) verschwenkbar ist.

3. Zangengriff nach Anspruch 1 oder 2, **dadurch gekennzeichnet, dass** zumindest ein Teil des Zangengriffes oder der Zangengriff (3, 4) in einer Ruheposition über ein Gelenk (5, 6) relativ zu dem Zangengehäuse (2) verschwenkbar ist.

4. Zangengriff nach den Ansprüchen 1 bis 3, **dadurch gekennzeichnet, dass** das Gelenk (5, 6) aus einem Zylinder (7) besteht, der durch eine Bohrung (10) im dem Zangengehäuse (2) zugewandten Ende des Zangengriffes (3, 4) hindurch reicht.

5. Zangengriff nach einem der vorstehenden Ansprüche, **dadurch gekennzeichnet, dass** aus der Mantelaußenfläche (8) des Zylinders (7) Stege (9) hervor stehen, die in Nuten (11) in der Innenseite der Bohrung (10) einrastbar sind.

6. Zangengriff nach Anspruch 5, **dadurch gekennzeichnet, dass** die Stege (9) auf der Mantelaußenfläche (8) des Zylinders (7) sich über die gesamte Länge der Zylinderlängsachse erstrecken.

7. Zangengriff nach den Ansprüchen 5 oder 6, **dadurch gekennzeichnet, dass** die Stege (9) auf der Mantelaußenfläche (8) des Zylinders (7) gleichmäßig über den Umfang der Mantelaußenfläche (8) verteilt sind.

8. Zangengriff nach den Ansprüchen 4 bis 7, **dadurch gekennzeichnet, dass** die Stege (9) auf der Mantelaußenfläche (8) des Zylinders (7) mithilfe eines in eine Stirnseite (13) des Zylinders (7) eintretenden Arretierstückes (12), das die Stege (9) radial in die Nuten (11) in den Innenseiten der Bohrungen (10) drückt, arretierbar sind.

9. Zangengriff nach Anspruch 8, **dadurch gekennzeichnet, dass** der Stab (12) als Schraube ausgebildet ist, die in eine der Stirnseiten (13) des Zylinders (7), das mit einem Innengewinde (14) versehen ist, einschraubbar ist.

10. Zangengriff nach einem der vorstehenden Ansprüche oder nach dem Oberbegriff des Anspruchs 1, **dadurch gekennzeichnet, dass** der Zangengriff (3, 4) einen Handhebel (16) und eine den Handhebel (16) zumindest teilweise umfassende Griffschale (15) aufweist, wobei der Abstand (b) zwischen Griffschale (15) und Handhebel (16) über einen Einstellmechanismus einstellbar ist.

11. Zangengriff nach Anspruch 10, **dadurch gekennzeichnet, dass** die Griffschale (15) wechselbar auf den Handhebel (16) aufstülpbar ausgebildet ist.

12. Zangengriff nach den Ansprüchen 10 oder 11, **dadurch gekennzeichnet, dass** der Abstand (b) zwischen Griffschale (15) und Handhebel (16) über einen Einstellmechanismus variabel einstellbar ist.

13. Zangengriff nach Anspruch 12, **dadurch gekennzeichnet, dass** der Einstellmechanismus als verstellbarer Abstandshalter am dem Zangengehäuse (2) abgewandten Ende des Zangengriffes (3, 4) ausgebildet ist.

14. Zangengriff nach Anspruch 13, **dadurch gekennzeichnet, dass** der verstellbare Abstandshalter als Einstellschraube (22) ausgebildet ist.

15. Zangengriff nach Anspruch 12, **dadurch gekennzeichnet, dass** der Einstellmechanismus als in einer Ausnehmung (26) verschiebbaren Nase (25) zwischen der Griffschale (15) und dem Handhebel (16) ausgebildet ist, wobei der Abstand (b) zwischen Griffschale (15) und Handhebel (16) je nach Position der Nase (25) in der Ausnehmung (26) variiert.

16. Zangengriff nach Anspruch 12, **dadurch gekennzeichnet, dass** die Griffschale (15) zweiteilig ausgebildet ist, wobei der Einstellmechanismus als in einer Ausnehmung (26) verschiebbaren Nase (25) zwischen den beiden Teilen der Griffschale (15) ausgebildet ist, wobei der Abstand (b) zwischen Griffschale (15) und Handhebel (16) je nach Position der Nase (25) in der Ausnehmung (26) variiert.

17. Zangengriff nach Anspruch 15 oder 16, **dadurch gekennzeichnet, dass** die Nase (25) und die Ausnehmung (26) keilförmig ausgebildet sind.

18. Zangengriff nach einem der vorstehenden Ansprüche, **dadurch gekennzeichnet, dass** die Griffschale (15) drehbar um eine im dem Zangengehäuse (2) zugewandten Bereich des Zangengriffes (3, 4) angeordnete Drehachse (17) gelagert ist und die Einstellung der Griffschale (15) um einen Winkelbereich durch Verstellen des Abstandshalters (18) am dem Zangengehäuse (2) abgewandten Ende des Zangengriffes (3, 4) erfolgt.

19. Zange, vorzugsweise eine Abisolierzange, mit zwei Zangengriffen (3, 4), die an einem Zangengehäuse (2) einer Zange (1) befestigt sind,
**dadurch gekennzeichnet, dass** mindestens einer der Zangengriffe (3, 4) gemäß einem der vorstehenden Ansprüche ausgebildet ist.

20. Zange nach Anspruch 9, **dadurch gekennzeichnet, dass** beide Zangengriffe (3, 4) gemäß einem der vorstehenden Ansprüche ausgebildet sind.
